# EUROPEAN PATENT SPECIFICATION

(11) **EP 3 498 099 B1**
(45) Date of publication and mention of the grant of the patent: **20.01.2021**
(21) Application number: 18211007.2
(22) Date of filing: 07.12.2018
(51) Int. Cl.: A21C 5/00, A21B 2/00, A21B 5/04, A21C 9/08, A21D 6/00, A23L 5/10, A21D 13/11

(54) **METHOD AND FACILITY FOR PRODUCING MULTI-LAYERED SPONGE CAKE, AS WELL AS THE SPONGE CAKE OBTAINED**
VERFAHREN UND ANLAGE ZUR HERSTELLUNG VON MEHRSCHICHTIGEM BISKUIT SOWIE ERHALTENER BISKUIT
PROCÉDÉ ET INSTALLATION DE PRODUCTION DE GÂTEAU MOUSSELINE MULTICOUCHES, AINSI QUE GÂTEAU MOUSSELINE AINSI OBTENU

(30) Priority: 15.12.2017 ES 201731413
(43) Date of publication of application: 19.06.2019
(73) Proprietor: Dulcesa, S.L.U., 46702 Gandia (Valencia) (ES)
(72) Inventor: JUAN FERNANDEZ, Rafael, 46702 GANDIA (Valencia) (ES)
(74) Representative: Ungria López, Javier

(56) References cited:
- EP-A1- 2 837 288
- CN-A- 105 410 083
- DE-U1-202006 011 189
- US-A- 2 524 437
- US-A1- 2014 120 221
- DATABASE GNPD [Online] MINTEL; 15 March 2017 (2017-03-15), anonymous: "Healthy Sakura Tree Baumkuchen", XP055572453, retrieved from www.gnpd.com Database accession no. 4687157
- DATABASE GNPD [Online] MINTEL; 10 March 2016 (2016-03-10), anonymous: "Strawberry & Milk Baumkuchen", XP055572456, retrieved from www.gnpd.com Database accession no. 3863387
- Anonymous: "Baking with infrared heating Identification How does it work? What can it NOT be used for?", , 20 December 2011 (2011-12-20), pages 1-3, XP055573358, Retrieved from the Internet: URL:http://www.foodtech-portal.eu/index.ph p?title=Special:PdfPrint&page=Baking+with+ infrared+heating [retrieved on 2019-03-22]
- GULUM SUMNU ET AL: "Microwave, infrared and infrared-microwave combination baking of cakes", JOURNAL OF FOOD ENGINEERING, vol. 71, no. 2, 1 November 2005 (2005-11-01), pages 150-155, XP055572728, GB ISSN: 0260-8774, DOI: 10.1016/j.jfoodeng.2004.10.027

## Description

### TECHNICAL FIELD

The present invention relates to a method for producing a new type of sponge cake that comprises several sponge cake layers, with the particularity in that each one of these layers can comprise a different color and flavoring, even when beginning from the same specific base dough. This method allows the sponge cake to be continuously obtained, which further allows for a large production without negatively affecting the organoleptic or dimensional quality of said multi-layered sponge cake.

Likewise, the present invention also relates to a new facility for producing the aforementioned multi-layered sponge cake. This facility is especially adapted for producing the sponge cake by means of the method described in this document.

### BACKGROUND OF THE INVENTION

Several different methods for obtaining a pastry product formed by multiple sponge cake layers are known in the state of the art. Thus, for example, patent ES2248010 T3 (Nestle, S.A.) describes a production method for a frozen pastry with a layered structure formed by different sponge cake layers. The object of this patent is to preserve the crunchy texture of the sponge cake layers, in contact with the frozen cream, during the storage of the pastry in a frozen state. To achieve this objective, a barrier composition (basically formed by fatty material) is applied on the surface of the sponge cake that will be in contact with the frozen cream.

On the other hand, patent ES2288347 B1 (Francisco Oliva Garín) describes a process for producing a pastry formed by different combined layers made up of different materials. Particularly, the pastry described in this patent is made up of a first chocolate sponge cake layer, a second crunchy layer of hazelnut filling, a third praline cream layer and, lastly, another sponge cake layer that is the same as the first layer.

EP2837288 describes a production device and a method for producing layered food having an outer shape and an inner hole shape formed by applying the layer of dough around a spit and applying infrared radiation at each layer. Thus, the spit is moved from the dosing station to the baking section 'n' times in order to obtain the final product which is a sponge cake with 'n' layers.

However, up to the present there is no known method or system for continuously producing sponge cake which allows sponge cakes with multiple layers of different color, flavor and/or aroma characteristics to be obtained from the same base dough and without any type of mixture of the components thereof (in particular, flavorings and/or colorants).

### DESCRIPTION OF THE INVENTION

The present invention relates to a method for producing a multi-layered sponge cake as disclosed in claim 1, characterized in that the method is carried out continuously and comprises the following stages:
a) distributing a base sponge cake dough in at least two different portions;
b) preparing at least two different doughs, wherein each one of these doughs is prepared independently, mixing at least a portion of the base dough with at least one additive;
c) dispensing the dough corresponding to a first sponge cake layer and treating this first layer with mid-wave infrared radiation;
d) dispensing the dough corresponding to a second sponge cake layer on the layer obtained in the previous stage and treating this second layer with infrared radiation, wherein stage d) is done n-1 times, n being a value equal to or greater than 2; and
e) baking the multi-layered sponge cake; in a convection oven at a temperature between 200 and 250 °C during a period between 8 and 22 minutes with the condition that the infrared treatment is applied to at least all of the layers with the exception of the last one.

The expressions "base dough" or "pure dough" must be understood as synonyms and refer to the sponge cake dough before specific additives for the different layers of the sponge cake are added, specifically colorants and/or flavorings.

The expression "dough with additives" must be understood as the base dough that comprises additives, specifically colorants and/or flavorings, which will become different sponge cake layers.

Stage d) is repeated as many times as necessary to obtain the multi-layered structure of the sponge cake. Therefore, the value of n corresponds to the number of sponge cake layers in the product to be obtained.

Additionally, in the method for producing a multi-layered sponge cake described in this document, it is not necessary to carry out infrared treatment on the last layer of dough deposited, rather it can be directly baked in the convection oven.

The base sponge cake dough used in the method described in this document can be obtained by beating the ingredients that make up the conventional dough for producing sponge cakes, in particular flour, sugar, eggs and water. Preferably, the base sponge cake dough can contain between 10 and 35% flour, between 8 and 25% sugar, between 5 and 15% eggs and between 2 and 12% water, amounts expressed in weight with respect to the total weight of the sponge cake dough. Other compounds that can be present in the composition of the base dough are glucose, butter, enzyme mixture, emulsifier, glycerol, sorbitol, di-acetate or a combination thereof. Additionally, the base dough can comprise an additive that enhances the sponginess and lightness of the product, for example sodium pyrophosphate and/or sodium bicarbonate.

This base dough can preferably be prepared in a mixer (1) comprised in the facility described in the present patent application by means of the following stages: adding flour to the mixer; while beating the flour, slowly adding water until a homogenous dough is formed; while continuing to beat the dough, adding sugar and eggs. Optional components may be independently added in any of the aforementioned stages.

The viscosity of the base dough can vary according to the composition of the dough and the way in which the ingredients are mixed. With the previously described composition and method it is possible to obtain a base dough with a viscosity between 1,5 Pa∘s and 100 Pa∘s (1500 and 100000 cP) Depending on the viscosity of the base dough of the sponge cake, it could be necessary to adjust some parameters of the facility used to produce the sponge cake described in this document. Among these parameters, it may be necessary to modify the characteristics of the circuit, the speed of the booster pumps or the dispensing nozzles (openings, etc).

The presence of lumps in the starting base dough could lead to problems with regard to homogeneity when dispensing the different sponge cake layers. With the object of obtaining a much more uniform dispensing of the dough, the method for producing multi-layered sponge cakes of the present invention can comprise sieving the base sponge cake dough through one or several filters.

Additionally, the method for producing a multi-layered sponge cake herein described can comprise a stage, preferably prior to the distribution of the dough into at least two different portions, wherein air is injected into and mixed with the sponge cake dough. This injection of air in the sponge cake dough creates inner bubbles which, after baking, provide the sponginess to the sponge cake. As a result, this stage allows minimize the use of processing aids for fermentation.

The successive sponge cake layers dispensed are treated with infrared radiation on the upper surface thereof. As a result of this treatment, also known as pre-baking or toasting in the present document, the consistency of the upper surface of each one of the layers is enhanced before the next layer is dispensed, thereby preventing the different layers from mixing. Preferably, the dispensed layers are treated with mid-wave infrared radiation, since this type of energy allows heat to be applied in a focalized manner on the surface of each layer, preventing the sides of the sponge cake from overheating.

In preferred embodiments of the present invention, the method for producing a multi-layered sponge cake is done in the facility described in this document. In particular, this continuous production method comprises the following stages:
a) impelling a base dough through a propulsion module to distribute the base dough between at least two mixing modules;
b) preparing at least two different doughs with additives in the mixing modules, wherein each dough with additives is prepared by mixing the base dough with specific additives, and impelling the different doughs with additives obtained in the mixing modules to different dispensing modules;
c) dispensing the dough with additives corresponding to a first sponge cake layer from one of the dispensing modules onto a conveyor belt, and pre-baking this first layer with the infrared heating system comprised in the dispensing module;
d) dispensing the dough with additives corresponding to a second sponge cake layer from another dispensing module onto the previous layer, and pre-baking this second layer with the infrared heating system comprised in the dispensing module; wherein stage d) is done n-1 times, n being a value equal to or greater than 2; and
e) baking the multi-layered sponge cake i in a convection oven at a temperature between 200 and 250 °C during a period between 8 and 22 minutes with the condition that the infrared treatment is applied to at least all of the layers with the exception of the last one.

As was previously mentioned, in the method of the present invention it is not necessary to apply infrared radiation to the last sponge cake layer deposited. As a result, the dispensing module that dispenses this last layer does not have to contain the infrared heating system or, alternatively, the same does not have to be in operation when the production method described in this document is carried out.

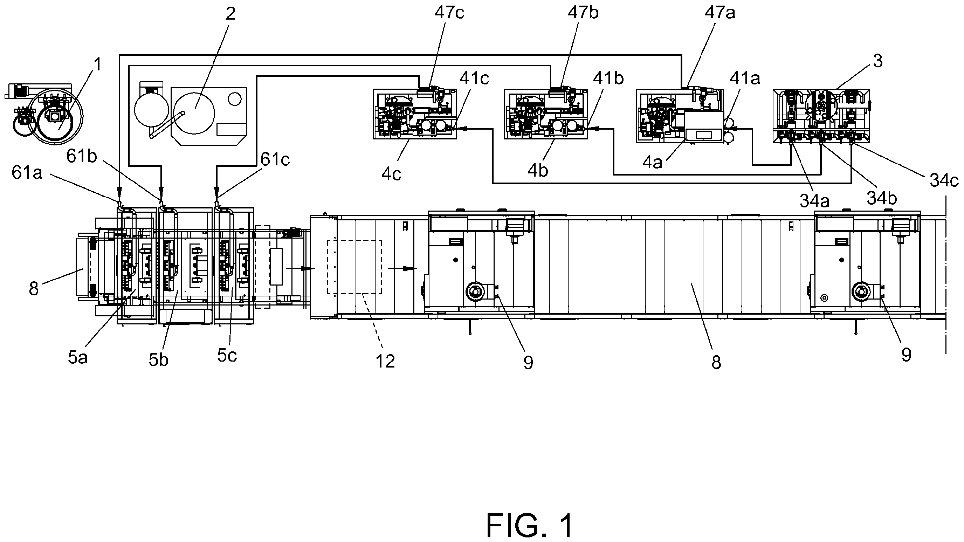

Stage d) is repeated as many times as necessary to obtain the multi-layered structure of the sponge cake. In particular, n corresponds to the number of layers of the sponge cake and, therefore, it also corresponds to the number of dispensing modules in use in the facility wherein the continuous production method described in this document is carried out. Thus, for example, when the production method takes place in the facility shown in figure 1, n is a value that is equal to 3 (dispensing modules (5a), (5b) and (5c)) and therefore, this stage d) is repeated two times, in order to apply doughs with additives from the dispensing modules (5b) and (5c).

The use of the propulsion module allows the base dough to be accumulated in the container, and for it to be distributed among the different mixing modules, preferably the number of mixing modules is equal to the number of different sponge cake layers we want to have in the final product. This configuration allows the characteristics of each sponge cake layer to be controlled in an entirely individual way, modifying the parameters of the different modules according to the requirements of the desired final product.

Each one of the mixing modules doses the additives that personalize the base dough, in particular colorants and/or flavorings, and accumulates the resulting dough with additives in the respective containers, from where it is impelled to the corresponding dispensing modules, situated on a conveyor belt so that the dough with additives corresponding to each one of the layers can be dispensed in a successive way as the aforementioned conveyor belt moves forward. This way, the method described in the present document offers a high degree of versatility since it allows any additive to be incorporated, in particular any colorant and/or flavoring, into the layers of the sponge cake, thereby making it possible to obtain a wide variety of different products.

Additionally, the method for producing a multi-layered sponge cake of the present invention can incorporate one or more sponge cake base dough layers, as long as the sponge cake comprises at least one layer of dough with additives formed from the same base layer. In these embodiments, after dispensing the base dough corresponding to the sponge cake layer in question, the sponge cake layer dispensed is also treated with infrared radiation. In particularly preferred embodiments, to said end, a dispensing module is used, such as the ones described in this patent application.

The forward motion speed of the conveyor belt is established based on the necessary baking time, among other aspects, in order for the surface of the deposited layer to have a sufficient consistency to support the upper layers. Preferably, the forward motion speed of the conveyor belt is 5-50 mm/s (10 Hz in the variable-frequency drive).

Once the dough corresponding to one sponge cake layer is dispensed on the conveyor belt, as the same moves forward, the sponge cake layer passes by the infrared lamps, where the upper surface of said layer is subjected to a pre-baking treatment, a process also referred to as toasting in this document, wherein by the action of the heat produced by said infrared lamps the consistency of this upper surface is enhanced, forming a crust or surface barrier.

Preferably, in the method for producing a multi-layered sponge cake of the present invention, mid-wave infrared lamps are used, in particular with a gold reflector and 4150W each. The number of infrared lamps suitable for obtaining a proper baking of the surface of the sponge cake layers will depend on the width of these layers. Thus, for a width of the dispensed layers of 1050 mm, the heating system preferably comprises 7 infrared lamps.

With this pre-baking or toasting treatment of the surface of each one of the sponge cake layers, the release of gases produced during the baking (CO₂, etc), which would reduce the sponginess of the final product, is prevented, and additionally, the mixture of the different sponge cake layers is avoided. More specifically, the surface characteristics of the different sponge cake layers are optimized, conditioning them to receive the next layer. In particular, in this pre-baking or toasting treatment, the dough acquires a spongy consistency and the consistency of the surface of a layer is enhanced before applying the next layer. As a result, when dispensing the dough (liquid) corresponding to the next layer, the same does not mix with the previously toasted layer.

Once multiple sponge cake layers have been deposited, the sponge cake is baked in a convection oven. This stage is carried out in at least a convection oven at a temperature between 200 and 250 °C, during a time period between 8 and 22 min.

The method and facility herein described allow multi-layered sponge cakes to be obtained with the desired dimensions. In particular, both the thickness of the layers and the dimensions (width and length) of the sponge cake can be regulated by modifying different parameters of the facility in which the method is carried out. Preferably, the method herein described allows a multi-layered sponge cake with a dough thickness between 2 and 10 mm for each layer and with a width of 1000 mm to be obtained.

The method for producing a multi-layered sponge cake herein described can comprise and additional cutting stage to obtain smaller sponge cake pieces, in particular pieces that make up the units to be sold. The cutting can be done using an ultrasonic knife and the pieces obtained can be rectangular or curved. Additionally, this method can comprise the additional stages of applying syrup between the different sponge cake layers and/or a final decoration stage, which could include designs.

Preferably, between each stage of dispensing a sponge cake layer a roller is applied to flatten and homogenize the height of each previously dispensed layer.

The present invention also relates to a multi-layered sponge cake, as disclosed in claim 3 obtained by the method described in this patent application. In particular, this sponge cake comprises at least two layers with different compositions (preferably color and/or flavoring), and the layers have a crust or surface barrier obtained by heating by means of infrared radiation that prevents the layers from mixing. The pre-baking method by means of infrared radiation provides layers that are more developed, which provides a characteristic sponginess to the multi-layered sponge cake. Additionally, the differentiation of the colors between the different layers is greater with this pre-baking stage and, additionally, a sponge cake with a different texture is obtained.

The multi-layered sponge cake can be in any shape, particularly rectangular or curved. On the other hand, this sponge cake can contain filling between the sponge cake layers, such as cream, truffle, chocolate, marmalade or syrup, for example. Additionally, the sponge cake can comprise a final decorative layer.

Preferably, the sponge cake layers obtained by the method described in this application have a thickness between 2 and 10 mm.

The present invention also relates to a facility for producing multi-layered sponge cakes, as disclosed in claim 4, characterized in that it comprises:
- a propulsion module (3) for a base sponge cake dough with at least two outlet pipes (34);
- at least two mixing modules (4), wherein each one of these modules is connected to one of the outlet pipes (34) of the propulsion module;
- at least two dispensing modules (5), wherein
   - each one of these dispensing modules is connected to one of the mixing modules (4),
   - each one of these dispensing modules (5) comprises at least one dough dispensing device (6), and
   - at least all of the dispensing modules except the last one comprise an infrared heating system (7); and
- a conveyor belt (8) situated below the dispensing modules (5).

Thus, the facility described in this document comprises independent mixing modules (4) for the different sponge cake layers, wherein each one of these mixing modules (4) can be connected to one or several dispensing modules (5), depending on the number of layers with a specific composition that one wants to incorporate into the sponge cake. This configuration allows each mixing module (4) and each dispensing module (5) to be independently dimensioned and designed, depending on the specific additives of the different sponge cake layers.

Additionally, this facility divides the impulsion of the dough into two parts, which allows the stage of mixing with the additives to be independent from the dosing and dispensing stage of the different sponge cake layers. As a result, with the facility of the present invention, the mixture can be carried out at a speed independent from the speed of the line, in other words, of the conveyor belt.

In the facility for producing a multi-layered sponge cake described in this document, each one of the mixing modules (4) is preferably connected to a different dispensing module (5). With this configuration, it is possible to obtain a sponge cake with multiple layers that have a different composition.

The facility described in the present document can also comprise the necessary equipment for obtaining the starting base dough. In particular, this facility can comprise a mixer for mixing the ingredients that make up the starting base dough for producing the sponge cake, and a turbo mixer wherein air can be injected and mixed with the dough to thereby improve the sponginess of the sponge cake. Additionally, the facility can comprise one or more convection ovens to bake the sponge cake once all of the layers of dough are formed and, optionally, a suitable cutting system for dividing the sponge cake obtained into rectangular or curved portions, such as ultrasonic equipment and a sonotrode suitable for cutting. These elements, which are conventional in the production of sponge cake, are preferably comprised in the facility described in the present patent application, since this way the production of multi-layered sponge cake is simplified. However, in alternative embodiments of the present invention, one or several of these elements can be separated from the same, so that both the preparation of the base dough and the treatment of the sponge cake once the multi-layered structure thereof is formed, in other words, the stages of baking and, optionally, cutting and/or decoration, can be done in a separate facility.

Additionally, the facility described in this document can comprise at least a filling applicator for fillings such as cream, truffle, chocolate, marmalade or syrup, situated between different dispensing modules, as well as a decoration applicator situated after the dispensing module for the last layer of the sponge cake. These applicators can be cartesian coordinate robots with two axes, one in the longitudinal direction of the belt and the other in the transverse direction. According to these particular embodiments of the invention, the axis in the longitudinal direction of the belt will be synchronized with the forward motion of the same, so that the filling will be applied from left to right, as it advances with the belt, then from right to left, and so forth in a cyclical manner. For the decoration, any design can be made by means of an editor.

In preferred embodiments, the facility described in this document comprises a propulsion module (3), also called first impulsion platform, which in turn comprises:
- an inlet pipe (31) for the base dough to enter into a container (32),
- a base dough container (32),
- at least two propulsion pumps (33) connected to the container (32), and
- an outlet pipe (34) connected to each propulsion pump (33).

The propulsion pumps (33) can be connected to the container (32) in a completely independent manner, in other words, the container can comprise independent outlets, each one of them joined to one of the propulsion pumps by means of pipes that allow for the passage of the base dough. Alternatively, the propulsion pumps (33) can be joined to a single outlet of the container (32), by means of a pipe that has a common part for the three pumps and another independent part for each one of them.

Preferably, the propulsion pumps (33) have an adjustable speed by means of a potentiometer or another equivalent method. This way, the impulsion of the base dough to each one of the mixing modules (4) can be independently adjusted.

In other preferred embodiments, the facility described in this document comprises a mixing module (4), also called second impulsion platform, which in turn comprises:
- a base dough inlet pipe (41) from one of the outlet pipes (34) of the propulsion module;
- at least one additive container (42) connected to an additive dosing unit (43);
- a mixer configured to obtain a dough with additives from the base dough and the additives, wherein the mixer (44) is connected at an initial part to the base dough inlet pipe (41) and the additive dosing units (43), and at the opposite end to a dough with additives container (45);

- a dough with additives container (45);
- a propulsion pump (46) connected to the container (45); and
- a dough with additives outlet pipe (47) connected to the propulsion pump (46).

The facility of the present invention preferably comprises as many mixing modules (4) as the number of layers of different compositions of sponge cake to be produced. Each one of these modules can be dimensioned and designed to add the additives that differentiate one layer from another to the starting base dough.

The mixer (44) is preferably a static mixer, configured to mix the base dough with additives as the components advance through the pipe that forms the mixer. In even more preferred embodiments of the present invention, the mixer (44) is a static mixer especially designed to mix highly viscous components with components with a low viscosity, able to function properly with low flow rates (100l/h), able to generate very homogenous mixtures and to cause very low pressure loss on the line.

In particular, the mixing modules (4) comprise at least two additive containers (42), one for a colorant and another for a flavoring, each one of them connected to a dosing unit (43). However, the facility described in the present document allows a greater number of additive containers to be included, for example for mixing the base dough with several different colorants, or incorporating another additional additive to the colorant and/or the flavoring.

The additive containers can have a low-level sensor to detect when the additive is running out. Preferably, the additive dosing units (43) are dosing units with a Coriolis effect.

The dosing units (43) allow additives such as colorants and flavorings to be applied according to the configuration of the product and proportionally to the dough that passes through the initial part of the mixer (44). To this end, the dosing units can be connected to an automation system, such as Profibus, for example, which allows for a greater control of the amount of product to be dosed as well as for data to be obtained on the density, total amounts, etc.

The mixing modules (4) preferably comprise a flow meter in the base dough inlet pipe (41), in any one of the additive dosing units (43), in the dough with additives outlet pipe (47), or in several of the same. The mixing modules (4) preferably comprise flow meters in the base dough inlet pipe (41), in the additive dosing units (43) and in the dough with additives outlet pipe (47). This way one can have a greater control over the dosing of the additives and the mixture of the same with the base dough.

The additive dosing units (43) are preferably activated in a way that is directly proportional to the flow rate of the pure dough that continuously arrives.

The dough with additives container (45) can have a level sensor and/or a stirring system, to maintain the consistency and homogeneity of the dough with additives. The container is preferably made of stainless steel.

The mixing modules (4) preferably comprise a filter in the base dough inlet pipe (41), in the dough with additives outlet pipe (47) or in both of the previous pipes. These filters allow possible lumps present in the sponge cake dough to be retained, preventing them from being dispensed with the sponge cake layer and, therefore, allowing a more homogenous layers to be obtained. Additionally, the incorporation of filters prevents the pipes through which the dough circulates from getting clogged, thereby facilitating the process of obtaining the multi-layered sponge cake.

The mixing modules (4) can comprise a frame (48), preferably made of stainless steel, on which the rest of the components are mounted. On the other hand, the different components of the module can be joined by a pipe system that allows for the flow of the dough and/or additives. Some of these pipes can have manual valves, to be able to purge the system when necessary. In particular, it is preferable to situate a non-return valve in the connections of the dosing units (43) to the mixer (44), so as to prevent the dough from going to the dosing units.

In other preferred embodiments, the facility described in this document comprises a dispensing module (5), which in turn comprises:
- a dough dispensing device (6) comprising:
   ∘ at least a dough distributor (61) that comprises an inlet pipe and multiple outlet pipes (62),
   ∘ a dough dosing unit (63) joined to the multiple outlet pipes (62); and
- at least an infrared heating system (7), situated after the dough-dispensing device (6) in the direction of motion of the conveyor belt (8).

The dough distributor (61) allows the dough to be distributed from the main pipe, connected to the outlet (47) of the mixing module, into smaller pipes arranged uniformly along the dough dosing unit (63). Thus, in preferred embodiments of the present invention, the multiple outlet pipes (62) of the dough distributor (61) are joined to multiple dosing nozzles (64) uniformly situated along the dough dosing unit (63).

In other alternative embodiments of the dough dispensing device (6), the dough dosing unit (63) is a flat piece internally machined to uniformly dose and dispense the dough throughout the entire length thereof. In accordance with these embodiments, the dough distributor (61) can be an assembly of pipes and connectors that allow the dough to be distributed from an inlet pipe to multiple outlet connectors (62). These are uniformly situated along the flat piece machined on the inside thereof to uniformly dispense the dough throughout the entire length of the same, also called nozzle in this application. At the end of this nozzle is a continuous slot, preferably with the same length as the nozzle, which acts as a dosing nozzle (64).

Additionally, the dough dosing unit (63) can have a cover that is removed for cleaning tasks. This cover can have a slot that defines the thickness of the dispensed layer.

The dispensing module (5) preferably comprises an elevation system (52) for the dough dispensing device (6). This way the dough dosing unit (63) can be situated at the required height with respect to the belt (8) on which the successive sponge cake layers are deposited. This system can be formed by an electrical shaft, actuated by a stepper motor, and guided by means of two bars. Preferably, the elevation system covers a length between 20 mm and 400 mm.

Additionally, the dispensing module (5) can comprise a frame, preferably made of aluminum, to anchor the dough dispensing device (6) to the conveyor belt (8). The height of this support can be adjusted to allow the sponge cake layers to be dispensed at different heights.

In preferred embodiments of the present invention, the width of the dosing nozzles (64) is adjustable. On the other hand, these nozzles can be removed to facilitate the cleaning of the system. The nozzles can be made of common materials, such as stainless steel, Teflon or nylon, among others.

The heating system for the dough (7) is made up of infrared lamps. In preferred embodiments, the lamps are mounted under a hood with holes to be able to extract the steam caused by baking the dough. To help extract the hot air, extractors can be mounted on the hood.

The dispensing module (5) preferably comprises an elevation system for the dough heating system (7). This way, the lamps can be situated at the necessary height from the surface of the dough for heating the same. This system can be formed by an electrical shaft, actuated by a stepper motor, and guided by means of two bars. Preferably, the elevation system of the dispensing nozzle covers a length between 20 mm and 400 mm.

To the degree in which it is necessary, the different components of the module can be joined by a pipe system that allows for the flow of the dough.

In particular embodiments of the invention, the dispensing modules (5) can comprise doors, for example made of transparent polycarbonate, to protect the access to the components of the module, likewise allowing visibility to the inside.

The heating system (7) comprises mid-wave infrared lamps, in particular with a gold reflector and 4150W each. The mid-wave lamps are able to focus the calorific value at a very specific point. These types of lamps are more suitable, since only the surface of the dough is intended to be heated in the method for producing multi-layered sponge cakes in which the facility is to be used, so that this surface has sufficient consistency and does not mix with the upper layer. The number of lamps for obtaining a correct baking or toasting of the surface of the layers of the sponge cake will depend on the width of these layers. Thus, for a width of the dispensed layers of 1050 mm, the heating system preferably comprises 7 infrared lamps.

The lamps are situated in such a way that the heat source points at the upper part of the dough, so that the successive dispensing modules do not burn the lower layers during the passage thereof by the lamps (7). Preferably, longitudinal infrared lamps are used, with the light focused in order to heat the edge of the dough and thereby preventing the same form dispersing to the sides.

In the facility described in this document, the infrared lamps can be anchored to the conveyor belt (8) by means of a support, the height of which may be adjusted. The height of the lamps is preferably between 50 and 110 mm with respect to the conveyor belt.

In particular embodiments of the present invention the conveyor belt (8) has dimensions of approximately 1 meter wide and the necessary length to be able to carry out the stages of the method for producing a multi-layered sponge cake described in this patent application. The conveyor belt is preferably metal or Teflon (polytetrafluoroethylene), since it must support the operating temperature of the infrared lamps (200 °C). In particular, Teflon is able to withstand a temperature of 300°C and has other advantageous properties, such as a low friction coefficient, impermeability and electrical insulation.

Furthermore, the conveyor belt (8) can have an encoder that allows for the synchronization of the different systems mounted on the same.

The facility herein described can comprise automated features for controlling the different components of the modules. In particular, the Profibus system can be used to automate one or more elements of the facility. As such, the control system can communicate with a PC (through an OPC server), from which the station can be configured and controlled. Furthermore, a tactile screen can be connected to manage the same.

### BRIEF DESCRIPTION OF THE FIGURES

In order to assist in a better understanding of the characteristics of the invention and to complement this description, the following figures, of illustrative and non-limiting nature, are attached as an integral part of the same:
Figure 1 is a top view of a facility comprising a propulsion module (3), three mixing modules (4a, 4b, 4c) and three dispensing modules (5a, 5b, 5c), wherein each one of the mixing modules is connected to one of the dispensing modules.
Figure 2 is a front view of a propulsion module (3) with three propulsion pumps (33) and three outlet pipes (34).
Figure 3 is a front view (fig. 3a), an isometric view (fig. 3b) and a top view (fig. 3c) of a mixing module (4) with two additive containers (42), one for colorant and the other for flavoring, and an additive dosing unit (43) for each one of these containers.
Figure 4 is a front view (fig. 4a) and a top view (fig. 4b) of a distribution module (5) with 15 outlet pipes in the dough dispensing device (6).
Figure 5 is a front view (fig. 5a) and an isometric view (5b) of a dough dispensing device (6), wherein the dough dosing unit (63) is joined on one side to the multiple outlet pipes of the dough distributor (62) and, on the other side it comprises a longitudinal slot that acts as a dosing nozzle (64).

### DETAILED DESCRIPTION OF THE INVENTION

Figure 1 shows a facility according to particular embodiments of the present invention, characterized in that it comprises a propulsion module (3) with three outlet pipes (34a, 34b, 34c), wherein each one of these pipes is joined to a different mixing module (4a, 4b, 4c), and wherein each one of the mixing modules is connected to a different dispensing module (5a, 5b, 5c). The dispensing modules are situated so that the dough with additives corresponding to the different sponge cake layers can be dispensed on a moving conveyor belt (8). In particular, the dough with additives corresponding to the different sponge cake layers is led to the dispensing modules (5a, 5b, 5c), in an order that is in the longitudinal direction of the forward motion of the conveyor belt (8), so that the first sponge cake layer can be dispensed from the first dispensing module (5a) on the belt (8) and, as the same advances, preferably at a speed of approximately 25 mm/s (10Hz in the variable frequency drive), the successive sponge cake layers can be dispensed from the successive dispensing modules (5b, 5c), on the previously dispensed and pre-baked sponge cake layers by means of the infrared heating system included in each one of the dispensing modules. In the method described in this document, it is not necessary to pre-bake the last sponge cake layer deposited and, therefore, the last dispensing module (5c) does not have to comprise an infrared heating system (7) or, alternatively, could include it but the same does not have to be in operation during the production of the multi-layered sponge cake.

According to the particular embodiment shown in figure 1, the facility for producing a multi-layered sponge cake comprises a mixer (1) for mixing the ingredients that make up the base dough, such as flour, sugar, water and eggs. Furthermore, the facility comprises a turbo mixer (2) wherein air can be injected and mixed with the dough to thereby improve the sponginess of the sponge cake. This facility can also comprise two convection ovens (9) for baking the sponge cake once all of the sponge cake layers are formed. This baking stage is preferably carried at a temperature between 200 and 250 °C during a time period between 8 and 22 min.

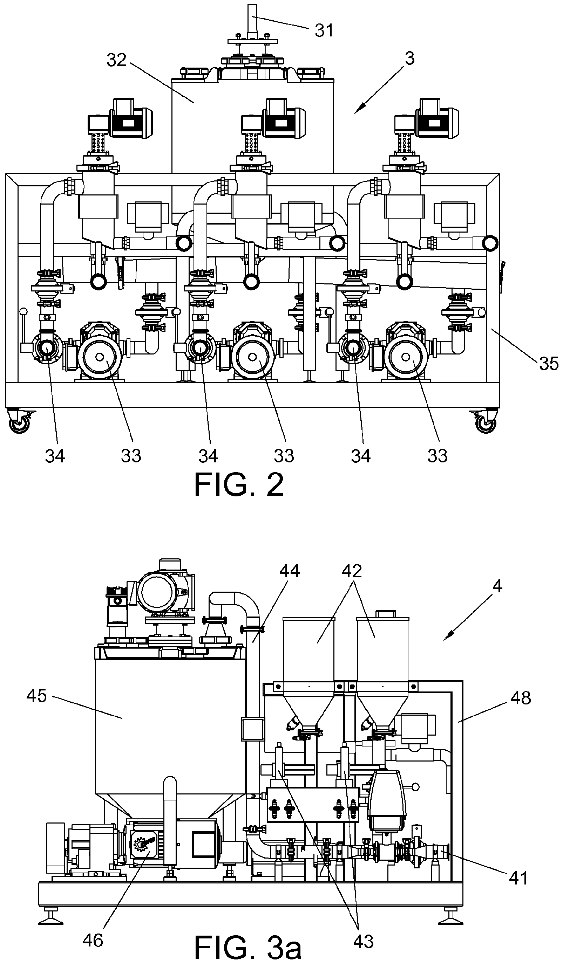

Figure 2 shows a particular embodiment of the propulsion module (3) comprised in the facility described in this document. According to this embodiment, the propulsion module comprises an inlet pipe (31) for the base dough to enter into a container (32), three propulsion pumps (33) connected to the container (32) by means of pipes and, additionally, three outlet pipes (34) each one of which is connected to a propulsion pump (33). These propulsion pumps have an adjustable speed by means of a potentiometer.

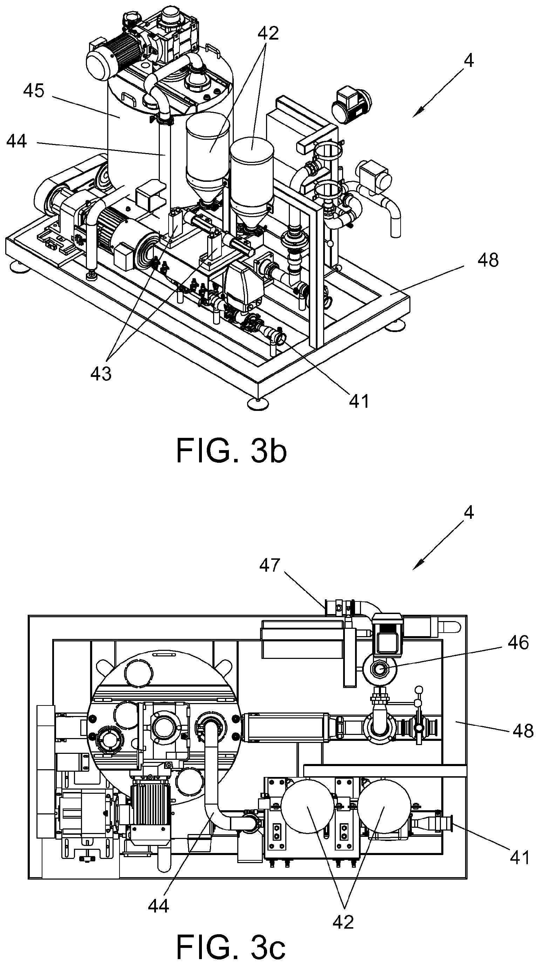

According to the particular embodiment of the mixing module (4), which can be seen in figures 3a, 3b and/or 3c, this module comprises a base dough inlet pipe (41) from one of the outlet pipes (34) of the propulsion module. Both the inlet pipe (41) and the additive dosing units (43) are connected to the mixer at the initial part thereof, so that the components are mixed as they advance through the pipe that forms the mixer.

The two additive containers (42), one for colorant and the other for flavoring, have a cylindrical-conical geometry and have a low-level sensor to detect when the colorant is running low. On the other hand, the additive dosing units (43) are dosing units that function by means of the Coriolis effect and comprise a pump actuated by a small motor and a flow sensor, in particular a magnetic-type flow meter at the outlet of the pump to measure the flow and to be able to synchronize the dispensing of the additives.

The mixer (44) is connected by the end part thereof to a dough with additives container (45), made of stainless steel. This container has a level sensor and a stirring system, in order to maintain the consistency of the dough with additives. Additionally, the mixing module (4) comprises a propulsion pump (46) connected to the container (45) to pump the dough with additives to the outlet pipe (47) and through the same to the dispensing module (5) connected to said pipe.

The mixing module shown in figures 3a, 3b and 3c comprises a frame (48) made of stainless steel, on which the rest of the components are mounted. Furthermore, the different components of the module are joined by a pipe system that allows for the flow of the dough or additives. Some of these pipes have manual valves so as to be able to purge the system when necessary. In particular, non-return valves are situated in the connections of the dosing units (43) with the mixer (44), so as to prevent the dough from going to the dosing units.

In preferred embodiments of the present invention, the mixing module (4) comprises a filter in the base dough inlet pipe (41), in the dough with additives outlet pipe (47) or in both pipes. These filters allow possible lumps present in the dough to be retained, preventing them from being dispensed with the sponge cake layer and, as a result, allow more homogenous layers to be obtained. Additionally, the incorporation of filters prevents the pipes through which the dough circulates from getting clogged, thereby facilitating the process of obtaining the multi-layered sponge cake.

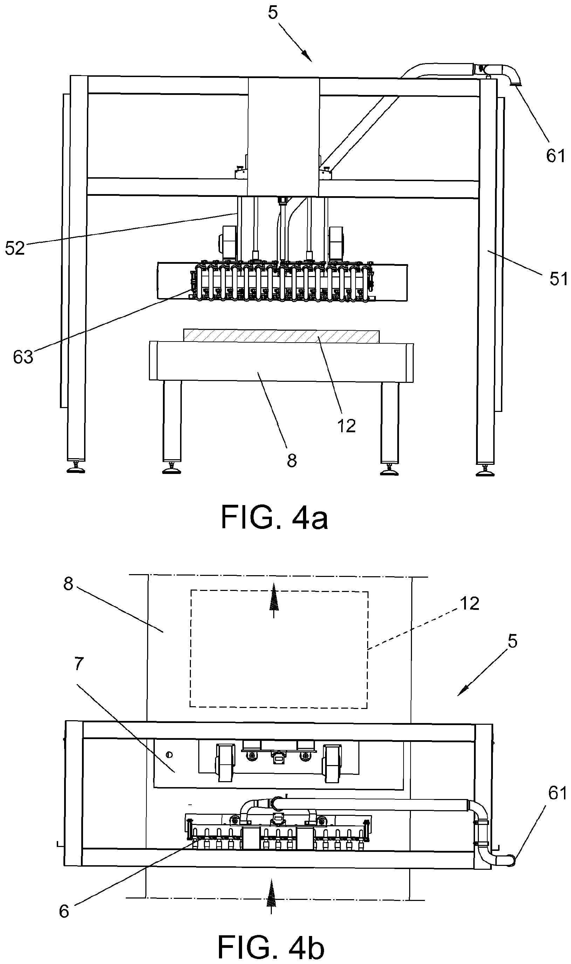

The dispensing modules (5) are in charge of depositing the sponge cake dough layers on the conveyor belt (8), and of heating the surface of these layers so that another layer can be deposited on the same. According to a particular embodiment shown in figures 4a and 4b, this module is made up of the following components: a steel frame (51), on which the rest of the components are mounted, a dough dispensing device (6) and an infrared heating system (7) that comprises multiple mid-wave infrared lamps with a gold reflector and 4150W each.

In particular, in figures 4a and 4b, the dough dispensing device (6) comprises a distributor of dough with additives (61) that is a pipe with an inlet connector and fifteen outlet connectors, where the outlet connectors (62) are placed along the entire length of the dough dosing unit (63). This nozzle is especially designed to provide a uniform dough flow, forming a continuous dough layer with a thickness of 2 mm and a width of 1 m. Additionally, the dispensing module (5) comprises an elevation system (52) of the dough dispensing device. This system is formed by an electrical shaft, actuated by a stepper motor, and guided by means of two bars. This elevation system covers a length between 20 mm and 400 mm.

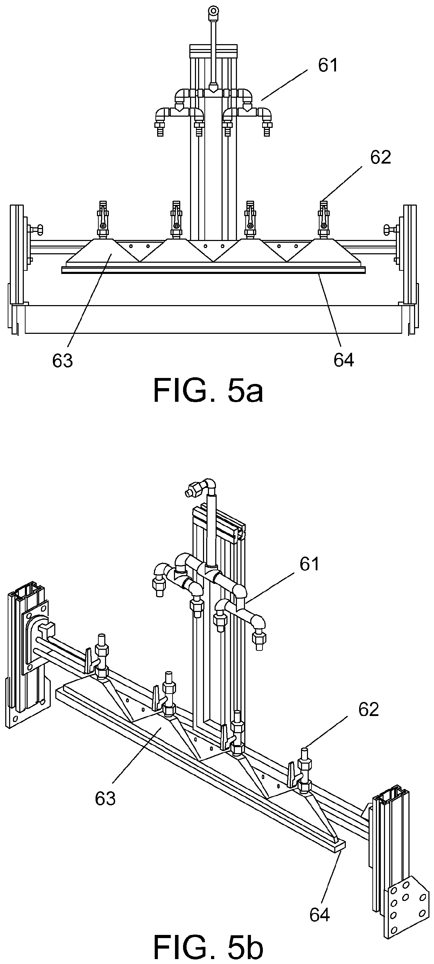

Figures 5a and 5b show an alternative design of the dough dispensing device (6), wherein the dough dosing unit (63) is a nozzle, preferably 1 m long. According to this embodiment, the dough with additives is distributed from the main pipe to a total of 4 outlet pipes (62), each one of which has an independent feed valve. These pipes are uniformly situated along the nozzle, at the end of which a continuous slot (64) is situated with the same length as the nozzle.

## Claims

1. A method for producing a multi-layered sponge cake, **characterized in that** the method is carried out continuously and comprises the following stages:
a) distributing a base sponge cake dough in at least two different portions;
b) preparing at least two different doughs, wherein each one of these doughs is prepared independently, mixing at least a portion of the base dough with at least one additive;
c) dispensing the dough corresponding to a first sponge cake layer and treating this first layer with mid-wave infrared radiation;
d) dispensing the dough corresponding to a second sponge cake layer on the layer obtained in the previous stage and treating this second layer with mid-wave infrared radiation, wherein the stage d) is done n times, n-1 being a value equal to or greater than 2; and
e) baking the multi-layered sponge cake in a convection oven at a temperature between 200 and 250°C during a time period between 8 and 22 minutes; with the condition that the infrared treatment is applied to at least all of the layers with the exception of the last one.

2. The method for producing a multi-layered sponge cake according to claim 1, wherein the method comprises injecting and mixing air into the sponge cake dough.

3. A multi-layered sponge cake obtained by the method described in any one of claims 1 to 2 and **characterized in that** it comprises n sponge cake layer with a dough thickness between 2 and 10 mm for each layer and a width of 1000 mm.

4. A facility for producing a multi-layered sponge cake, **characterized in that** it comprises:
- a propulsion module (3) for a base sponge cake dough with at least two outlet pipes (34);
- at least two mixing modules (4), wherein each one of these modules is connected to one of the outlet pipes (34) of the propulsion module;
- at least two dispensing modules (5), wherein
• each one of these dispensing modules is connected to one of the mixing modules (4),
• each one of these dispensing modules (5) comprises at least one dough dispensing device (6), and
• at least all of the dispensing modules (5) except the last one comprise an infrared heating system (7) which comprises mid-wave infrared lamps with a gold reflector and 4150 W;
- at least one convection oven (9) next to the last dispensing module (5); and
- a conveyor belt (8) situated below the dispensing modules (5).

5. The facility for producing a multi-layered sponge cake according to claim 4, wherein each one of the mixing modules (4) is connected to a different dispensing module (5).

6. The facility for producing a multi-layered sponge cake according to any one of the claims 4 to 5, wherein the propulsion module (3) comprises:
• an inlet pipe (31) for the base dough to enter into a container (32),
• a base dough container (32),
• at least two propulsion pumps (33) connected to the container (32), and
• an outlet pipe (34) connected to each propulsion pump (33).

7. The facility for producing a multi-layered sponge cake according to any one of the claims 4 to 6, wherein the mixing module (4) comprises:
• a base dough inlet pipe (41) from one of the outlet pipes (34) of the propulsion module;
• at least one additive container (42) connected to an additive dosing unit (43);
• a mixer configured to obtain a dough with additives from the base dough and the additives, wherein the mixer (44) is connected at an initial part to the base dough inlet pipe (41) and the additive dosing units (43), and at the opposite end to a dough with additives container (45);
• a dough with additives container (45);
• a propulsion pump (46) connected to the container (45); and
• a dough with additives outlet pipe (47) connected to the propulsion pump (46).

8. The facility for producing a multi-layered sponge cake according to claim 7, wherein the mixing module (4) comprises a flow meter in the base dough inlet pipe (41), in one of the additive dosing units (43), in the dough with additives outlet pipe (47) or in several of the same.

9. The facility for producing a multi-layered sponge cake according to any one of the claims 7 to 8, wherein the mixing module (4) comprises a filter in the base dough inlet pipe (41), in the dough with additives outlet pipe (47) or in both pipes.

10. The facility for producing a multi-layered sponge cake according to any one of the claims 7 to 9, wherein the mixing module (4) comprises a non-return valve between the additive dosing unit (43) and the mixer (44).

11. The facility for producing a multi-layered sponge cake according to any one of the claims 4 to 10, wherein the dispensing module (5) comprises:
• a dough dispensing device (6) comprising:
∘ at least one dough distributor (61) that comprises an inlet pipe and multiple outlet pipes (62),
∘ a dough dosing unit (63) joined to the multiple outlet pipes (62); and
• at least one infrared heating system (7), situated after the dough dispensing device (6) in the direction of motion of the conveyor belt (8).

12. The facility for producing a multi-layered sponge cake according to claim 11, wherein the dough dosing unit (63) comprises at least a dosing nozzle (64).

13. The facility for producing a multi-layered sponge cake according to any one of claims 11 to 12, wherein the dispensing module (5) comprises an elevation system for the dough dispensing device (6), for the heating system (7) or for both.

## Patentansprüche

1. Verfahren zum Herstellen eines mehrschichtigen Biskuitkuchens, **dadurch gekennzeichnet, dass** das Verfahren kontinuierlich ausgeführt wird und die folgenden Schritte umfasst:
a) Verteilen eines Biskuitkuchen-Grundteigs in wenigstens zwei verschiedenen Abschnitten;
b) Ansetzen wenigstens zweier verschiedener Teige, wobei diese Teige jeweils unabhängig voneinander hergestellt werden und wenigstens ein Teil des Grundteigs mit wenigstens einem Zusatzstoff vermischt wird;
c) Ausgeben des Teigs, der einer ersten Biskuitkuchen-Schicht entspricht, und Behandeln dieser ersten Schicht mit mittelwelliger Infrarotstrahlung;
d) Ausgeben des Teigs, der einer zweiten Biskuitkuchen-Schicht entspricht, auf die in der vorhergehenden Stufe produzierte Schicht und Behandeln dieser zweiten Schicht mit mittelwelliger Infrarotstrahlung, wobei die Stufe d) n-mal durchgeführt wird und n-1 ein Wert ist, der 2 oder mehr beträgt; und
e) Backen des mehrschichtigen Biskuitkuchens in einem Umluftofen bei einer Temperatur zwischen 200 und 250 °C während eines Zeitraums zwischen 8 und 22 Minuten unter der Bedingung, dass die Infrarot-Behandlung auf wenigstens alle der Schichten mit Ausnahme der letzten angewendet wird.

2. Verfahren zum Herstellen eines mehrschichtigen Biskuitkuchens nach Anspruch 1, wobei das Verfahren Einblasen und Beimischen von Luft in den/zu dem Biskuitkuchen-Teig umfasst.

3. Mehrschichtiger Biskuitkuchen, produziert mit dem in einem der Ansprüche 1 bis 2 beschriebenen Verfahren und **dadurch gekennzeichnet, dass** er n Biskuitkuchen-Schichten mit einer Teigdicke zwischen 2 und 10 mm für jede Schicht und einer Breite von 1000 mm umfasst.

4. Anlage zum Herstellen eines mehrschichtigen Biskuitkuchens, **dadurch gekennzeichnet, dass** sie umfasst:
- ein Antriebs-Modul (3) für einen Biskuitkuchen-Teig mit wenigstens zwei Auslass-Rohren (34);
- wenigstens zwei Misch-Module (4), wobei jedes dieser Module mit einem der Auslass-Rohre (34) des Antriebs-Moduls verbunden ist;
- wenigstens zwei Ausgabe-Module (5), wobei
• jedes dieser Ausgabe-Module mit einem der Misch-Module (4) verbunden ist,
• jedes dieser Ausgabe-Module (5) wenigstens eine Teig-Ausgabevorrichtung (6) umfasst, und
• wenigstens alle der Ausgabe-Module (5) mit Ausnahme des letzten ein Infrarot-Heiz-System (7) umfassen, das mittelwellige Infrarotlampen mit einem Goldreflektor sowie 4150 W umfasst;
- wenigstens einen Umluftofen (9) neben dem letzten Ausgabe-Modul (5); und
- ein Förderband (8), das sich unterhalb der Ausgabe-Module (5) befindet.

5. Anlage zum Herstellen eines mehrschichtigen Biskuitkuchens nach Anspruch 4, wobei jedes der Misch-Module (4) mit einem anderen Ausgabe-Modul (5) verbunden ist.

6. Anlage zum Herstellen eines mehrschichtigen Biskuitkuchens nach einem der Ansprüche 4 bis 5, wobei das Antriebs-Modul (3) umfasst:
• ein Einlass-Rohr (31), über das der Grundteig in einen Behälter (32) gelangt,
• einen Grundteig-Behälter (32),
• wenigstens zwei Antriebs-Pumpen (33), die mit dem Behälter (32) verbunden sind, und
• ein Auslass-Rohr (34), das mit jeder Antriebs-Pumpe (33) verbunden ist.

7. Anlage zum Herstellen eines mehrschichtigen Biskuitkuchens nach einem der Ansprüche 4 bis 6, wobei das Misch-Modul (4) umfasst:
• ein Einlass-Rohr (41) für Grundteig von einem der Auslass-Rohre (34) des Antriebs-Moduls;
• wenigstens einen Zusatzstoff-Behälter (42), der mit einer Dosier-Einheit (43) für Zusatzstoffe verbunden ist;
• eine Mischeinrichtung, die so ausgeführt ist, dass sie einen Teig mit Zusatzstoffen aus dem Grundteig und den Zusatzstoffen produziert, wobei die Mischeinrichtung (44) an einem Anfangsteil mit dem Einlass-Rohr (41) für Grundteig sowie den Dosier-Einheiten (43) für Zusatzstoffe und an dem entgegengesetzten Ende mit einem Behälter (45) für einen Teig mit Zusatzstoffen verbunden ist;
• einen Behälter (45) für Teig mit Zusatzstoffen;
• eine Antriebs-Pumpe (46), die mit dem Behälter (45) verbunden ist; sowie
• ein Auslass-Rohr (47) für Teig mit Zusatzstoffen, das mit der Antriebs-Pumpe (46) verbunden ist.

8. Anlage zum Herstellen eines mehrschichtigen Biskuitkuchens nach Anspruch 7, wobei das Misch-Modul (4) eine Durchflussmesseinrichtung in dem Einlass-Rohr (41) für Grundteig, in einer der Dosier-Einheiten (43) für Zusatzstoffe, in dem Auslass-Rohr (47) für Teig mit Zusatzstoffen oder in mehreren derselben umfasst.

9. Anlage zum Herstellen eines mehrschichtigen Biskuitkuchens nach einem der Ansprüche 7 bis 8, wobei das Misch-Modul (4) einen Filter in dem Einlass-Rohr (41) für Grundteig, in dem Auslass-Rohr (47) für Teig mit Zusatzstoffen oder in beiden Rohren umfasst.

10. Anlage zum Herstellen eines mehrschichtigen Biskuitkuchens nach einem der Ansprüche 7 bis 9, wobei das Misch-Modul (4) ein Rückschlagventil zwischen der Dosier-Einheit (43) für Zusatzstoffe und der Mischeinrichtung (44) umfasst.

11. Anlage zum Herstellen eines mehrschichtigen Biskuitkuchens nach einem der Ansprüche 4 bis 10, wobei das Ausgabe-Modul (5) umfasst:
• eine Teig-Ausgabevorrichtung (6), die umfasst:
o wenigstens eine Teig-Verteilungseinrichtung (61), die ein Einlass-Rohr und mehrere Auslass-Rohre (62) umfasst,
o eine Einheit (63) zum Dosieren von Teig, die mit den mehreren Auslass-Rohren (62) verbunden ist;
sowie
• wenigstens ein Infrarot-Heizsystem (7), das in der Bewegungsrichtung des Förderbandes (8) hinter der Teig-Ausgabevorrichtung (6) angeordnet ist.

12. Anlage zum Herstellen eines mehrschichtigen Biskuitkuchens nach Anspruch 11, wobei die -Einheit (63) zum Dosieren von Teig wenigstens eine Dosier-Düse (64) umfasst.

13. Anlage zum Herstellen eines mehrschichtigen Biskuitkuchens nach einem der Ansprüche 11 bis 12, wobei das Ausgabe-Modul (5) ein Anhebesystem für die Teig-Ausgabevorrichtung (6), für das Heizsystem (7) oder für beide umfasst.

## Revendications

1. Procédé pour la production d'une génoise multicouche, **caractérisé en ce que** le procédé est réalisé en continu et comprend les étapes suivantes :
a) distribution d'une pâte de génoise de base dans au moins deux portions différentes ;
b) préparation d'au moins deux pâtes différentes, dans lequel chacune de ces pâtes est préparée indépendamment, mélange d'au moins une portion de la pâte de base avec au moins un additif ;
c) étalement de la pâte correspondant à une première couche de génoise et traitement de cette première couche avec un rayonnement infrarouge à onde moyenne ;
d) étalement de la pâte correspondant à une seconde couche de génoise sur la couche obtenue dans l'étape précédente et traitement de cette seconde couche avec un rayonnement infrarouge à onde moyenne, dans lequel l'étape d) est réalisée n fois, n-1 étant une valeur supérieure ou égale à 2 ; et
e) cuisson de la génoise multicouche dans un four à convection à une température de 200 à 250°C pendant une période de 8 à 22 minutes ; à la condition que le traitement infrarouge est appliqué à au moins toutes les couches à l'exception de la dernière.

2. Procédé de production d'une génoise multicouche selon la revendication 1, dans lequel le procédé comprend l'injection et le mélange d'air dans la pâte de génoise.

3. Génoise multicouche obtenue par le procédé décrit dans l'une quelconque des revendications 1 à 2 et **caractérisée en ce qu'**elle comprend n couches de génoise avec une épaisseur de pâte de 2 à 10 mm pour chaque couche et une largeur de 1 000 mm.

4. Installation pour produire une génoise multicouche, **caractérisée en ce qu'**elle comprend :
- un module de propulsion (3) pour une pâte de génoise de base avec au moins deux tuyaux de sortie (34) ;
- au moins deux modules de mélange (4), dans lesquels chacun de ces modules est connecté à un des tuyaux de sortie (34) du module de propulsion ;
- au moins deux modules d'étalement (5), dans lesquels
▪ chacun de ces modules d'étalement est connecté à un des modules de mélange (4),
▪ chacun de ces modules d'étalement (5) comprend au moins un dispositif d'étalement de pâte (6), et
▪ du moins tous les modules d'étalement (5) à l'exception du dernier comprennent un système de chauffage infrarouge (7) qui comprend des lampes infrarouge à onde moyenne avec un réflecteur d'or et 4 150 W ;
- au moins un four à convexion (9) proche du dernier module d'étalement (5) ; et
- une bande convoyeuse (8) située sous les modules d'étalement (5).

5. Installation pour produire une génoise multicouche, selon la revendication 4, dans laquelle chacun des modules de mélange (4) est connecté à un module d'étalement différent (5).

6. Installation pour produire une génoise multicouche selon l'une quelconque des revendications 4 à 5, dans laquelle le module de propulsion (3) comprend :
▪ un tuyau d'entrée (31) pour que la pâte de base entre dans un récipient (32),
▪ un récipient de pâte de base (32),
▪ au moins deux pompes de propulsion (33) connectées au récipient (32), et
▪ un tuyau de sortie (34) connecté à chaque pompe de propulsion (33).

7. Installation pour produire une génoise multicouche selon l'une quelconque des revendications 4 à 6, dans laquelle le module de mélange (4) comprend :
▪ un tuyau d'entrée de pâte de base (41) parmi les tuyaux de sortie (34) du module de propulsion ;
▪ au moins un récipient d'additif (42) connecté à une unité de dosage d'additif (43) ;
▪ un mélangeur configuré pour obtenir une pâte avec des additifs à partir de la pâte de base et des additifs, dans lequel le mélangeur (44) est connecté dans une partie initiale au tuyau d'entrée de pâte de base (41) et aux unités de dosage d'additif (43), et à l'extrémité opposée à un récipient de pâte avec additifs (45) ;
▪ un récipient de pâte avec additifs (45) ;
▪ une pompe de propulsion (46) connectée au récipient (45) ; et
▪ un tuyau de sortie de pâte avec additifs (47) connecté à la pompe de propulsion (46).

8. Installation pour produire une génoise multicouche selon la revendication 7, dans lequel le module de mélange (4) comprend un débitmètre dans le tuyau d'entrée de pâte de base (41), dans une des unités de dosage d'additif (43), dans le tuyau de sortie de pâte avec additifs (47) ou dans plusieurs de ceux-ci.

9. Installation pour produire une génoise multicouche selon l'une quelconque des revendications 7 à 8, dans laquelle le module de mélange (4) comprend un filtre dans le tuyau d'entrée de pâte de base (41), dans le tuyau de sortie de pâte avec additifs (47) ou dans les deux tuyaux.

10. Installation pour produire une génoise multicouche selon l'une quelconque des revendications 7 à 9, dans laquelle le module de mélange (4) comprend une vanne de non-retour entre l'unité de dosage d'additif (43) et le mélangeur (44).

11. Installation pour produire une génoise multicouche selon l'une quelconque des revendications 4 à 10, dans laquelle le module d'étalement (5) comprend :
▪ un dispositif d'étalement de pâte (6) comprenant :
au moins un distributeur de pâte (61) qui comprend un tuyau d'entrée et de multiple tuyaux de sortie (62),
une unité de dosage de pâte (63) jointe aux multiples tuyaux de sortie (62) ; et
▪ au moins un système de chauffage infrarouge (7) situé après le dispositif d'étalement de pâte (6) dans la direction de déplacement de la bande convoyeuse (8).

12. Installation pour produire une génoise multicouche selon la revendication 11, dans laquelle l'unité de dosage de pâte (63) comprend au moins une buse de dosage (64).

13. Installation pour la production d'une génoise multicouche selon l'une quelconque des revendications 11 à 12, dans laquelle le module d'étalement (5) comprend un système d'élévation pour le dispositif d'étalement de pâte (6), pour le système de chauffage (7) ou pour les deux.
